(19) 

Europäisches
Patentamt
European
Patent Office
Office européen
des brevets

(11) **EP 2 212 032 B1**

(12) **EUROPEAN PATENT SPECIFICATION**

(45) Date of publication and mention
of the grant of the patent:
**20.04.2011  Bulletin 2011/16**

(51) Int Cl.:
***B05D 5/08*** *(2006.01)*   ***C08J 7/04*** *(2006.01)*

(21) Application number: **08851733.9**

(86) International application number:
**PCT/US2008/083839**

(22) Date of filing: **18.11.2008**

(87) International publication number:
**WO 2009/067414 (28.05.2009 Gazette 2009/22)**

(54) **TREATED PLASTIC SURFACES HAVING IMPROVED CLEANING PROPERTIES**

BEARBEITETE KUNSTSTOFFOBERFLÄCHEN MIT VERBESSERTEN
REINIGUNGSEIGENSCHAFTEN

SURFACES DE MATIÈRE PLASTIQUE TRAITÉES AYANT DE MEILLEURES PROPRIÉTÉS
NETTOYANTES

(84) Designated Contracting States:
**AT BE BG CH CY CZ DE DK EE ES FI FR GB GR
HR HU IE IS IT LI LT LU LV MC MT NL NO PL PT
RO SE SI SK TR**

(30) Priority: **19.11.2007  US 988925 P**

(43) Date of publication of application:
**04.08.2010  Bulletin 2010/31**

(73) Proprietor: **E. I. du Pont de Nemours and Company
Wilmington, DE 19898 (US)**

(72) Inventor: **MAY, Donald, Douglas
Chadds Ford
Pennsylvania 19317 (US)**

(74) Representative: **Towler, Philip Dean et al
Dehns
St Bride's House
10 Salisbury Square
London
EC4Y 8JD (GB)**

(56) References cited:
**EP-A- 1 249 280      WO-A-2004/069904
DE-A1- 10 244 490    US-A1- 2006 147 705**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

PROPERTIES

CROSS REFERENCE TO RELATED APPLICATION

This application claims the benefit of U.S. Provisional Application No. 60/988,925 filed November 19, 2007 which is incorporated herein by reference in its entirety.

Background of the Disclosure

Field of the Disclosure

The present disclosure relates to plastic surfaces having improved cleaning properties, and in particular to polyvinyl chloride substrates having improved cleaning properties.

Description of the Related Art

A key commercially significant feature of surfaces that are extremely difficult to wet is their self cleaning action because the cleaning of these surfaces is expensive and time consuming. Of interest here is the surface energy between the two surfaces that are in contact and the need to reduce their free surface energy. If the free surface energies are intrinsically very low, it can generally be assumed that there is a weak bond between the two surfaces. Further, materials that have low surface energies, are relatively easy to clean.

Another method of reducing the wettability of objects is by topological alterations of the surfaces. Surfaces of this type lead to rapid droplet formation, and as the droplets roll off they absorb dirt particles and thus clean the surface. This principle has been borrowed from the natural world. For example, the leaves of the lotus plant have elevations made of wax, and these elevations lower the contact area with the water.

Attempts have been made to use microrough surfaces, ie, the so called Lotus Effect for the generation of easy to clean or self cleaning coatings. US6858284 describes a three step process for the preparation of Lotus Effect surfaces, application of a curable base resin to a substrate, application of particles, and then a curing step to lock the particles into place. This process requires three separate steps that are separate from the manufacture of the extruded plastic part, adding cost and complexity to the production of Lotus Effect surfaces.

A need exists for self cleaning surfaces that have stability and that are not easily removed over time. Furthermore, it is desirable that these surfaces can be produced during the manufacture of the thermoplastic part.

Summery of the Disclosure

The disclosure relates to a self cleaning thermoplastic substrate, typically polyvinyl chloride, comprising: a thermoplastic substrate surface having secured thereto a plurality of composite particles, the composite particles comprising a mixture of a thermoplastic resin powder particle, a tackifier and a hydrophobically treated inorganic particle whereby the tackifier adheres hydrophobically treated particles to the resin powder particle.

The thermoplastic resin powder of the self cleaning thermoplastic substrate can be polyvinyl chloride, polymethyl methacrylate, polyolefin, copolymer of ethylene acrylate or copolymer of ethylene methacrylate.

The composite powder of the surface can range from 0.1 wt.% to 50 wt.% based on the weight of the self cleaning thermoplastic substrate.

The hydrophobically treated particle can be a silicate, metal oxide, calcium carbonate, barium sulfate, metal powder, silica and mixtures thereof. In particular, the hydrophobically treated particle can be fumed silica or titanium dioxide.

The hydrophobically treated particle can be treated with a surface treatment selected from the group consisting of organo-silane; organo-siloxane; fluoro-silane; organo-phosphonate; organo-phosphoric acid compound; organo-phosphinate; organo-sulfonic compound; hydrocarbon-based carboxylic acid; hydrocarbon-based carboxylic acid derivative; hydrocarbon-based carboxylic acid polymer; hydrocarbon-based amide; low molecular weight hydrocarbon wax; low molecular weight polyolefin; low molecular weight polyolefin co-polymer; hydrocarbon-based polyol; hydrocarbon-based polyol derivative; alkanolamine; alkanolamine derivative; organic dispersing agent; and mixtures thereof. In particular, the organo-silane can be represented by the structural formula

$$Si(R^1)(R^2)(R^3)(R^4) \qquad (I)$$

wherein at least one R is a non-hydrolyzable organic group; and at least one R is a hydrolyzable group.

The tackifier can be a polysiloxane having the structural formula

$$Me_3SiO[SiOMeR^7]_x\text{-}[SiOMe_2]_y\text{-}SiMe_3,$$

where x and y are independently Integers from 0 to 200, typically 1 to 200, more typically up to 100 even more typically up to 50, and $R^7$ is a saturated or unsaturated linear or branched unsubstituted or heteroatom-substituted hydrocarbon containing 1 to 20 carbon atoms, typically 1 to about 8 carbon atoms. A typical heteroatom is oxygen. Typically $R^7$ is an alkoxy group having the structure

$$\text{-}(CH_2)_3\text{-}O\text{-}(Ch_2CH_2O)_\rho H,$$

wherein p is an integer of 1 to about 25. Typically the number average molecular weight ($M_n$) of the siloxane ranges from about 1,000 to about 10,000, most typically from about 4,000 to about 5,000.

The tackifier can be a mixed methyl alkyl polysiloxane. More specifically, the polysiloxane can be polydimethylsiloxane, vinyl phenylmethyl terminated dimethyl siloxane, divinylmethyl terminated polydimethyl siloxane, and mixtures thereof.

The ratio of the thermoplastic resin powder particles to hydrophobically treated particles of the composite ranges from 10:1 to 1:10, preferably about 3:1 to about 1 :3.

The mixture of the self cleaning thermoplastic substrate further comprises an antistatic agent which can be an ethoxylated amine. In one embodiment the ethoxylated amine is an alkyldiethanolamine. The alkyldiethanolamine can be a $C_{13}/C_{15}$ alkyldiethanolamine wherein the alkyldiethanolamine can be a mixture of $C_{13}$ alkyldiethanolamine and $C_{15}$ alkyldiethanolamine

In one embodiment, the tackifier can be a mixture of a polysiloxane and the antistatic agent can be the $C_{13}/C_{15}$ alkyldiethanolamine.

In one aspect the disclosure relates to a process for making a self cleaning thermoplastic substrate surface, comprising:

mixing a plurality of thermoplastic resin powder particles, a plurality of hydrophobically treated particles and a tackifier to form a composite powder; and
securing the composite powder to the surface of the thermoplastic substrate.

BRIEF DESCRIPTION OF THE DRAWINGS

Figure 1 is a simplified schematic drawing of a device in accordance with the disclosure.
Figure 2 is a simplified schematic drawing of the testing apparatus for dirt pick up resistance and cleanability.

DETAILED DESCRIPTION OF THE DISCLOSURE

The disclosure relates to a self cleaning thermoplastic substrate, comprising: a thermoplastic substrate surface having secured thereto a plurality of composite particles comprising a mixture of a thermoplastic resin powder particle, a tackifier and a hydrophobically treated inorganic particle whereby the tackifier adheres the hydrophobically treated particle to the thermoplastic resin powder particle and methods of making the self cleaning thermoplastic surface.

Thermoplastic Substrate Surface:

The thermoplastic substrate surface of this disclosure comprises a high molecular weight polymer.

Polymers useful in this disclosure are high molecular weight melt processable polymers. By "high molecular weight" it is meant to describe polymers having a melt index value of 0.01 to 50, typically from 2 to 10 as measured by ASTM method D1238-98. By "melt-processable," it is meant a polymer that can be extruded or otherwise converted into shaped articles through a stage that involves obtaining the polymer in a molten state.

Polymers which are suitable for use in preparing the thermoplastic substrate surface of this disclosure include, by way of example but not limited thereto, polymers of ethylenically unsaturated monomers including olefines such as polyethylene, polypropylene, polybutylene, and copolymers of ethylene with higher olefins such as alpha olefins containing 4 to 10 carbon atoms or vinyl acetate; vinyls such as polyvinyl chloride or polyvinylidene fluoride, polyvinyl esters such as polyvinyl acetate, polystyrene, acrylic homopolymers, copolymers and terpolymers including without limit acrylonitrile butadiene styrene terpolymer (ABS); phenolics; alkyds; amino resins; epoxy resins, polyamides, polyurethanes; phenoxy resins, polysulfones; polycarbonates; polyesters and chlorinated polyesters; polyethers; acetal resins; polyimides; and polyoxyethylenes. Mixtures of polymers are also contemplated.

Typically, the polymer may be selected from the group consisting of polyolefin, polyvinyl chloride, polyamide and polyester, and mixture of these. More typically used polymers are polyvinyl chloride.

Other Additives

A wide variety of additives may be present in the polymer composition used to prepare the thermoplastic substrate surface of this disclosure as necessary, desirable or conventional. Such additives include polymer processing aids such as fluoropolymers, fluoroelastomers, etc., catalysts, initiators, anti-oxidants (e.g., hindered phenol such as butylated hydroxytoluene), thermal stabilizers, blowing agent, ultraviolet light stabilizers (e.g., hindered amine light stabilizers or "HALS"), organic pigments including tinctorial pigments, plasticizers, antiblocking agents (e.g. clay, talc, calcium carbonate, silica, silicone oil, and the like) leveling agents, flame retardants, anti-cratering additives, and the like.

The thermoplastic composition, together with any additives, can be formed into any suitable shaped article of manufacture such as a film, container, bottle, plate, industrial or consumer part. Especially suitable articles are those that may be exposed to dirt and grime such as exterior architectural building parts including without limit, window casings, exterior siding, containers for products including consumer products (e.g. personal care products or residential cleaning products) or industrial products (e.g. industrial cleaning products) and the like.

Thermoplastic Resin Powder:

The thermoplastic resin powder can be any suitable thermoplastic resin having a particle size (d50) of about 50 $\mu$m and a melting point in the range of about 30°C to about 900°C, typically about 40° to less than about 100°C.

The thermoplastic resin powder can be a polymer of ethylene monomer and a vinyl monomer and, optionally, carbon monoxide. The vinyl monomer can be a vinyl acetate or vinyl acrylic monomer. A nonlimiting example of a suitable resin that is commercially available is a terpolymer of ethylene, vinyl acetate and carbon monoxide having 28.5$\pm$1 weight percent vinyl acetate, 9.0$\pm$1 weight percent carbon monoxide with the balance being ethylene, based on the total weight of the terpolymer, such terpolymer being commercially available under the name Elvaloy® 742. Other suitable ethylene vinyl acetate or vinyl acrylic polymers are Elvaloy® 661 , and Elvaloy® 741 by E.I. du Pont, Wilmington, DE. Elvaloy® 742 has a melting point of 45°C and Elvaloy® 741 has a melting point of 66°C.

Typically, the terpolymer is ground to a fine powder. The terpolymer can be ground to a powder comprising particles in which 100% are less than 30 mesh (695 $\mu$m). The powder particles can be formed from loosely and/or firmly agglomerated individual particles.

Alternate thermoplastic resin powders are selected from the group consisting of polyethylene polymers and copolymers, including low density polyethylene, linear low density polyethylene and high density polyethylene; acid ester copolymers such as ethylene acrylic acid copolymer or ethylene methacrylic acid copolymers. A suitable example of a commercially available acid ester copolymer is a copolymer of ethylene and methyl acrylate wherein the methyl acrylate component represents 24 wt.%, based on the entire weight of the copolymer, with the balance being ethylene having a melting point of 91°C sold under the tradename Elvaloy® 1224 AC by E.I. du Pont de Nemours and Company of Wilmington, DE.

The thermoplastic resin powder may be present in the amount of about 50 to about 99.9 % by weight, more typically about 90 to about 95 % by weight, based on the entire weight of the composite particle.

Furthermore, the thermoplastic resin powder can contain inorganic and/or organic colored pigments for visual and aesthetic effects. These pigments are commercially available materials well known to those skilled in the art. Examples of such pigments include various colored inorganic metal oxides such as Cobalt Chomites, Cobalt Titanates, Cobalt Phosphates, Bismuth Vanadates and the like commercially available from Shepherd Color Company, Cincinnati, OH. Inorganic white pigments such as titanium dioxide (commercially available from E.I. du Pont de Nemours and Company, Wilmington, DE) can be employed. Also colored organic pigments such as copper phthalocyanine and quinacridone pigments can be added to the thermoplastic resin powder to add color and visual effects to the self-cleaning surfaces.

Hydrophobically Treated Inorganic Particles:

The particles for hydrophobic treatment may be selected from the group consisting of silicates; metal oxides, such as titanium dioxide and zinc oxide; calcium carbonate; barium sulfate; elemental metal powders such as iron, titanium, copper; and silicas such as fumed silica, and mixtures thereof.

Typically the inorganic particles have a particle size diameter of about 0.02$\mu$m to about 50$\mu$m, more typically from about 0.1 $\mu$m to about 25$\mu$m and most preferably from about 0.5$\mu$m to about 10 $\mu$m. Suitable particles can have a diameter of less than about 500 nm or may be formed from agglomerates of primary particles having a size from about 2 to about 1000nm.

The inorganic particles can be hydrophobically treated with organic surface treatment materials that include, but are not limited to, for example, organo-silanes; organo-siloxanes; fluoro-silanes; organo-phosphonates; organo-phosphoric acid compounds such as organo-acid phosphates, organo-pyrophosphates, organo-polyphosphates, and organo-metaphosphates; organo-phosphinates; organo-sulfonic compounds; hydrocarbon-based carboxylic acids and associated derivatives and polymers; hydrocarbon-based amides; low molecular weight hydrocarbon waxes; low molecular weight polyolefins and copolymers thereof; hydrocarbon-based polyols and derivatives thereof; alkanolamines and derivatives thereof; and commonly utilized organic dispersing agents; all the above utilized either individually or as mixtures, applied in concert or sequentially.

Suitable organo-silanes for use in the practice of this disclosure include silanes disclosed in U.S. Patent No. 5,560,845 issued to Birmingham, Jr. et al. on October 1, 1996, having the general formula

$$Si(R^1)(R^2)(R^3)(R^4) \qquad (I)$$

in which at least one R is a non-hydrolyzable organic group, such as alkyl, cycloalkyl, aryl, or aralkyl, having 1-20 carbon atoms, typically 4-20 carbon atoms, most typically 6-20 carbon atoms, and at least one R is a hydrolyzable group such as alkoxy, halogen, acetoxy, or hydroxy. The other two R are, independently, hydrolyzable or non-hydrolyzable as above. It is typical that at least two, and especially that three, of the R are hydrolyzable. The non-hydrolyzable R can be fully or partially fluorine substituted. A silane having the foregoing description is herein called "organo-silane" in reference to the non-hydrolyzable R group(s). Organo-silanes may be linear or branched, substituted or unsubstituted, and saturated or unsaturated. Typically, non-hydrolyzable R groups are non-reactive. Alkyl, cycloalkyl, aryl, and aralkyl are typical non-hydrolyzable R, with alkyl being most typical, including the possibility of any of these groups being fully or partially fluorine substituted. When the hydrolyzable R are identical, the organo-silane can be represented by

$$R^5_x SiR^6_{4-x} \qquad (II)$$

wherein $R^5$ is non-hydrolyzable and $R^6$ is hydrolyzable as defined above and x=1-3. Typically $R^6$ include methoxy, ethoxy, chloro, and hydroxy. Ethoxy is especially typical for ease of handling. Some typical organo-silanes include octyltriethoxysilane, nonyltriethoxysilane, decyltriethoxysilane, dodecyltriethoxysilane, tridecyltriethoxysilane, tetradecyltriethoxysilane, pentadecyltriethoxysilane, hexadecyltriethoxysilane, heptadecyltriethoxysilane and octadecyltriethoxysilane. Mixtures of organo-silanes can be used.

In embodiments utilizing organo-silanes represented by Formula II, preferred silanes are $R^5$=8-18 carbon atoms; $R^6$=ethoxy; and x=1 to 3. The $R^5$=8-18 carbon atoms are preferred, for example for enhanced processibility. $R^6$=ethoxy is preferred for ease of handling. Most typical is octyltriethoxysilane. Some other examples of hydrophobic surface treatment materials are described in detail in US2005/023992 published October 27, 2005. More typically the hydrophobically treated inorganic particles include hydrophobically treated fumed silica available commercially under the product designation LE1 (sold by Degussa Evonik, Parsippany, NJ) and titanium dioxide available commercially under the product designation R-104 (sold by E.I. du Pont de Nemours and Company, Wilmington, DE). The hydrophobically treated inorganic particles may be present in the amount of about 5 to about 75 %, more typically about 10 to about 50 % and most typically about 10 to about 25 %, based on the weight of the composite.

Preparation of the Composite:

The composite comprising a mixture of the thermoplastic resin powder and the hydrophobically treated inorganic particles can be prepared by blending together the thermoplastic resin powder and hydrophobically treated inorganic particle in the presence of a tackifier using a V-cone blender manufactured by Patterson-Kelly, E. Stroudsburg, PA. The composite can also be made using an injector treater of the kind disclosed in U.S. Patent No. 4,303,702, or spraying from solvent solutions and subsequent drying. Typically the ratio of the thermoplastic resin powder to the hydrophobically treated inorganic particle is 10:1 to 1:10, preferably about 3:1 to about 1 :3.

To adhere the hydrophobically treated inorganic particle onto the thermoplastic resin powder to form a composite, the thermoplastic resin powder can be treated with a tackifier. The tackifier is a liquid at room temperature and can have a viscosity ranging from about 1 cSt to about 80,000 cSt, more specifically from about 100 to about 1000 cSt. Typically, the tackifier is an inert, non-toxic, liquid that is not volatile at room temperature. Preferably the tackifier is non-reactive to the other ingredients in the mixture or the substrate surface so that it does not change or modify or interfere with those compounds and any other additives present. The term "adhere" is used to mean that the inorganic particles can be held to the thermoplastic resin powder either loosely or firmly, but to a degree sufficient that during processing a major proportion, preferably all, of the inorganic particles of the composite remain with the composite and do not become airborne creating an objectionable dusty environment.

The tackifier can be a polysiloxane having the structural formula

$$Me_3SiO[SiOMeR^7]_x-[SiOMe_2]_y-SiMe_3,$$

where x and y are independently integers from 0 to 200, typically 1 to 200, more typically up to 100 even more typically up to 50, and $R^7$ is a saturated or unsaturated linear or branched unsubstituted or heteroatom-substituted hydrocarbon containing 1 to 20 carbon atoms, typically 1 to about 8 carbon atoms. A typical heteroatom is oxygen. Typically $R^7$ is an alkoxy group having the structure

$$-(CH_2)_3-O-(CH_2CH_2O)_pH,$$

wherein p is an integer of 1 to about 25. Typically the number average molecular weight ($M_n$) of the siloxane ranges from about 1,000 to about 10,000, most typically from about 4,000 to about 5,000.

The tackifier can be selected from the group consisting essentially of polydimethyl siloxane, functional silicones with pendant hydrocarbon groups and high boiling liquid hydrocarbon resins. The tackifier can be a mixed methyl alkyl polysiloxane. More specifically, the polysiloxane can be polydimethylsiloxane, vinyl phenylmethyl terminated dimethyl siloxane, divinylmethly terminated polydimethyl siloxane, and mixtures thereof.

In a preferred embodiment, the tackifying resin is a polydimethyl siloxane.

An example of a commercially available compositions which can be suitable for use as the tackifier include a polydimethylsilsoxane commercially available under the product designation DC-200-60M (Dow Corning, Midland MI) which has a viscosity of 60,000 cSt.

An antistatic agent can also be mixed with the materials making up the composite. The antistatic agent can be used to minimize electrostatic build-up which can lead to dusting. Typically the antistatic agent is an inert, non-toxic liquid that is not volatile at room temperature. Preferably the antistatic agent is non-reactive to the other ingredients in the mixture or the substrate surface so that it does not change or modify or interfere with those compounds and any other additives present.

The antistatic agent can be an ethoxylated amine. Typically, the ethoxylated amine is a compound of the formula:

$$R^8-[-N(R^9)R^{10}]_m$$

wherein m is 1,
$R^8$ is $C_4$-$C_{24}$ alkyl, $C_4$-$C_{24}$ alkanoyl, $C_4$-$C_{24}$ alkenyl, $C_4$-$C_{24}$ alkenoyl, phenyl or benzoyl and when m is 2, $R^8$ is $C_1$-$C_{24}$ alkylene,
$C_4$-$C_{24}$ alkenylene or phenylene, $R^9$ is hydrogen,
$C_1$-$C_{24}$ alkyl or $-[-CH_2-CH_2-O]_n-H$, $R^{10}$ is $[-CH_2-CH_2-O-]_n-H$,
m is 1 or 2, and
n is 1, 2, 3, 4 or 5.

Alkyl having from 4 to 24 carbon atoms is a branched or unbranched radical, such as, for example, n-butyl, sec-butyl, isobutyl, tert-butyl, 2-ethylbutyl, n-pentyl, isopentyl, 1-methylpentyl, 1,3-dimethylbutyl, n-hexyl, 1-methylhexyl, n-heptyl, isoheptyl, 1,1,3,3-tetramethylbutyl, 1-methylheptyl, 3-methylheptyl, n-oxtyl, isooctyl, 2-ethylhexyl, 1,1,3-trimethylhexyl, 1,1,3,3-tetramethylpentyl, nonyl, isononyl, decyl, isodecyl, undecyl, isoundecyl, dodecyl, isododecyl, 1,1,3,3,5,5-hexamethylhexyl, tridecyl, tetradecyl, pentadecyl, hexadecyl, heptadecyl, octadecyl (stearyl) icosyl or docosyl.

Alkanoyl having from 4 to 24 carbon atoms is a branched or unbranched radical, such as, for example, n-butanoyl, sec-butanoyl, isobutanoyl, 2-ethylbutanoyl, n-pentanoyl, isopentanoyl, 1-methylpentanoyl, 1,3-dimethylbutanoyl, n-hexanoyl, 1-methylhexanoyl, n-heptanoyl, isoheptanoyl, 1-methylheptanoyl, 3-methylheptanoyl, n-octanoyl, isooctanoyl, 2-ethylhexanoyl, nonanoyl, isononanoyl, decanoyl, isodecanoyl, undecanoyl, isoundecanoyl, dodecanoyl, isododecanoyl, tridacanoyl, tetradecanoyl, pentadecanoyl, hexadecanoyl, heptadecanoyl, octadecanoyl or docosanoyl.

Alkenyl having 4 to 24 carbon atoms is a branched or unbranched radical such as, for example, 2-butenyl, 3-butenyl, isobutenyl, n-2,4— pentadienyl, 3-methyl-2-butenyl, n-2-octenyl, n-2-dodecenyl, isododecenyl, oleyl, n-2-octadecenyl or n-4-octadecenyl. Alkenyl can have 4 to 18, especially 4 to 12, for example 4 to 6 carbon atoms.

Alkenoyl having 4 to 24 carbon atoms is a branched or unbranched radical such as, for example 2-butenoyl, 3-butenoyl,isobutenoyl, n-2,4-pentadienoyl, 3-methyl-2-butenoyl, n-2-octenoyl, n-2-dodecenoyl, isododecenoyl, n-2-octadecenoyl or n-4-octadecenoyl. Alkenoyl can have 4 to 18, especially 4 to 12, for example 4-6 carbon atoms.

$C_1$-$C_{24}$ Alkylene is a branched or unbranched radical, for example methylene, ethylene, propylene, trimethylene, tetramethylene, pentamethylene, hexamethylene, heptamethylene, octamethylene, decamethylene, dodecamethylene or octadecamethylene.

$C_4$-$C_{24}$ Alkenylene is, for example, butenylene, octenylethylene, or dodecenylethylene. Alkenylene can have 2 to 8 carbon atoms.

In particular mixtures can comprise the ethoxylated amine wherein $R^8$ is $C_{11}$-$C_{20}$ alkyl or $C_{11}$-$C_{20}$ alkanoyl, $R^9$ is hydrogen or -[-CH$_2$-CH$_2$-O-]$_n$-H, $R^{10}$ is [-CH$_2$-CH$_2$-O-]$_n$-H, m is 1, and n is 1 or 2.

The ethoxylated amines are known in the literature and disclosed for example in U.S. 2006/0167146 A1, and GB-B-906174. Ethoxylated amines are commercially available, for example $C_{13}$/$C_{15}$ alkyl diethanol amine [Atmer 163 (RTM), Uniqema or Ciba Specialty Chemicals, Inc.] CAS 107043-84-5.

A particularly suitable composite is formed from a mixture comprising polyvinyl chloride powder, fumed silica or titanium dioxide, polydimethylsiloxane and $C_{13}$/$C_{15}$ alkydiethanol amine.

The thermoplastic resin powder particles can be treated with the tackifier and optional antistatic agent prior to adding the hydrophobically treated inorganic particles. Thus the process can be carried out in two steps, but this disclosure is not limited to a two step process. In a two-step process, however, the thermoplastic resin powder is treated with the tackifier, optionally mixed with an antistatic agent, by contacting the thermoplastic resin powder with the tackifier to form a treated thermoplastic resin powder and then the so-treated thermoplastic resin powder is mixed with the hydrophobically treated inorganic particles to form the composite particles. The tackifier and the thermoplastic resin powder and the hydrophobically treated inorganic particles can be contacted by mixing the ingredients together in a suitable mixing device, for example, without limit, a V-cone blender. A suitable V-cone blender is commercially available from Patterson-Kelly, of East Stroudsburg, PA). An injector treater, spraying from solvent solutions and subsequent drying as discussed hereinabove can also be employed.

Preparation of the Treated Thermoplastic Substrate Surface:

The composite can be applied to the extruded or calendered thermoplastic substrate surface by any suitable method. Typically, the composite is applied to the substrate surface as the substrate is extruded from the die, but before the substrate reaches the calender roller. Typically this region in the process is useful for applying the composite to the substrate surface because it is close to the exit of the extruder die where the temperature of the extrudate is elevated. The extrudate can be sufficiently warm that the pressure of calendering causes the composite to adhere to the substrate. Typically, heat of extrusion is sufficient.

In one embodiment of the process, at the exit of a compounding extruder can be placed a vibrating powder feeder to dose the composite onto the extruded substrate surface. Those skilled in the art will appreciate that the composite particles can form a layer on the surface, the thickness of the layer can vary depending upon the end-use. The layer is preferably substantially uniform.

The composite can then be secured to the surface by calendering or compression molding the substrate. In particular, the substrate with the composite particles applied to a surface thereof can be passed through a heated calender roller at a temperature of between about 20 °C and about 200 °C, more typically about 20 to about 100 °C, the temperature being depending on the softening point of the thermoplastic resin powder used to construct the composite particulate. Alternately the composite particles can be compression molded with heat and pressure onto a preexisiting thermoplastic substrate surface at temperature between 20°C to about 200 °C, more typically 80°C to 200°C, the temperature being dependent on the thermoplastic resin.

The substrate described herein can be used for various shaped articles, especially shaped articles that are exposed to dust and dirt. The thermoplastic composition can be formed into any suitable shaped article of manufacture such as a film, container, bottle, plate, industrial or consumer part. Especially suitable articles are those that may be exposed to dirt and grime such as exterior architectural building parts including without limit, window casings, exterior siding, especially vinyl siding, plastic lumber for decks, car parts, road traffic devices, appliance housings, electronic devices such as computers, phones, televisions, monitors and monitor screens, storage units and parts therefore, containers for products including consumer products (e.g. personal care products, such as shampoo bottles and cosmetic containers, or residential cleaning products) or industrial products (e.g. industrial cleaning products) and the like.

EXAMPLES

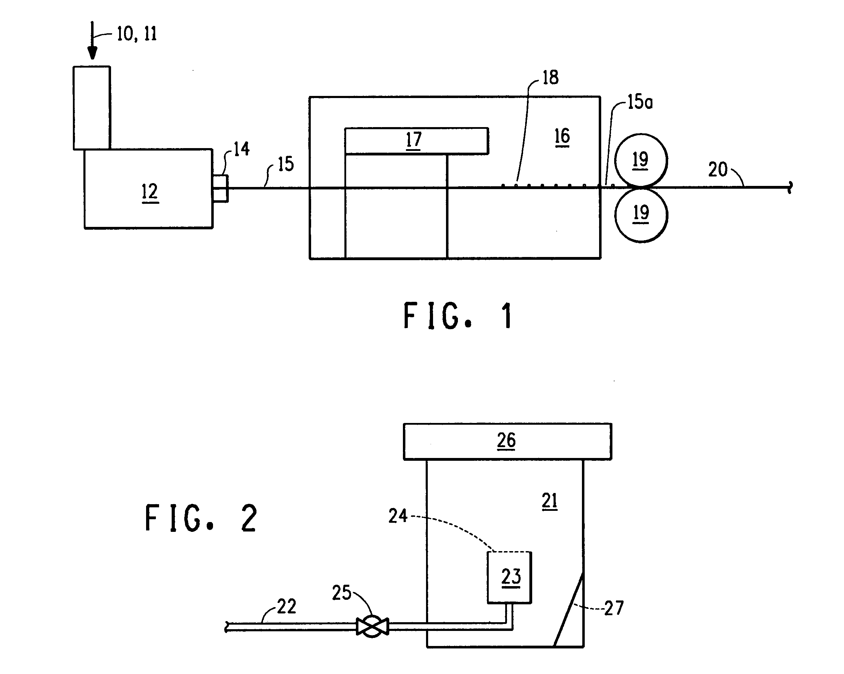

The self cleaning surfaces of this disclosure were made using the equipment shown in Figure 1 , wherein dry plastic resin 10, either powder or pellets and additives 11 such as pigments were gravity fed into a compounding extruder 12. The compounding extruder 12 was fitted to a 4 inch (10 cm) by 0.050 inch (0.127 cm) slit die 14. The extruded thermoplastic sheet 15 was then continuously fed into an enclosed polycarbonate box 16 fitted with a 6 inch (15 cm) by 17 inch (43 cm) vibrating powder feeder 17 (Eriez Magnets, Erie, PA) for addition of the composite of this disclosure 18 comprising various resin, tackifler and powder compositions. The enclosed box 16 served to contain the composite and to insure uniform Coverage on the sheet 15. The composite coated sheet 15a then exited the enclosure and was fed into a stainless steel calendar roller 19 to melt press the powder coating into a continuous film coating on the extruded sheet. The sheet 20 was manually cut and tested as described below.

Cleanability Testing

The extruded samples were tested for both dirt pick up resistance (DPR) and cleanability in the apparatus shown in Figure 2. DPR is defined as the ability of a treated surface 20 to repel dirt as compared to an untreated control. This can be expressed as

$$DPR = 10 \times (1 - (L^*_{si} - L^*_{ss})/(L^*_{ci} - L^*_{cs}))$$

where
$L^*_{ss}$ Is the L* reading of the soiled treated sample of the disclosure;
$L^*_{si}$ is the L* reading of the treated sample before soiling :
$L^*_{cs}$ is the L* reading of the untreated soiled sample (control); and
$L^*_{ci}$ is the L* reading of the untreated sample before solling (control). Cleanability is a measure of how well the sample returns to its initial color state and is defined as

$$Cleanability\ (C) = 10 \times (L^*_{sc} - L^*_{ss})/(L^*_{si} - L^*_{ss})$$

where
$L^*_{sc}$ is the L* reading of the soiled treated sample of the disclosure after cleaning;
$L^*_{ss}$ is the L* reading of the soiled treated sample of the disclosure; and
$L^*_{si}$ is the L* reading of the treated sample before soiling.

L* was measured on a Hunter Model lab scan and calibrated with a reference blank before each use. Samples were soiled in the test chamber shown in Figure 2 that comprises a polyethylene bucket 21 fitted with a removable lid 26 and a bottom tube 22 centered in the bucket and that has a ½ inch (1.3 cm) wide by ¾ inch (1.9 cm) high chamber 23 covered with a removable screen (100 mesh) 24, the screen can be attached by way of a fastener (not shown). The tube was fitted to an air source of about 15 to about 22 psig and controlled with a ball valve 25. The screen 24 was removed and a 0.2 gm charge of Lampblack 101 (Degussa Evonik, Parsippany, NJ) was placed in the chamber, the screen reattached and the treated samples 20 along with an untreated control panel were laid against the wall of the test chamber. The L* readings of all panels were measured and recorded prior to testing. The lid 26 was loosely placed on the bucket 21 , the screen 24 was attached to chamber 23 and a 5 second blast of air was applied to the carbon black, After letting the soot settle, the chamber was opened in a hood to remove the treated and untreated samples and they were read again. The samples were then cleaned by placing them under a laboratory water faucet and rinsing with a stream of water for 5 seconds. The samples were allowed to air dry and again evaluated.

Composite 1

This Composite 1 was made by placing into a V-cone blender (Patterson-Kelly, East Stroudsburg, PA) 1500 gms of an ethylene vinyl acetate carbon monoxide terpolymer (Elvaloy® 742 terpolymer), 7.5 gms of polydimethylsiloxane (DC-200-60000 siloxane sold by Dow Coming of Midland, MI) and the contents were mixed for 10 minutes. 150 gms of hydrophobically treated fumed silica (LE-1 fumed silica sold by Evonik-Degussa, Parsippany, NJ) was added to the mixture of ingredients in the blender and the contents were blended for an additional 10 minutes.

Composite 2

This Composite 2 was made by a process similar to Composite 1 except that 270 gms of ethylene vinyl acetate carbon monoxide terpolymer Elvaloy® 742, 2.7 gms of polydimethylsiloxane DC-200-60M, and 2.7 gms of $C_{13}/C_{15}$ alkyldiethanol amine Atmer®163 (Ciba Specialty Chemicals, Tarrytown, NY), and 30 gms of hydrophobically treated fumed silica LE-1 were used.

Example 1

Into the compounding extruder 12 shown in Figure 1, was placed a preblended mixture of PVC powder (Geon PVC powder E6950 natural, Avon Lake OH) and 5 phr of titanium dioxide R-706 (sold by E. I. du Pont de Nemours and Company, Wilmington, DE). This mixture was fed into the twin-screw compounder 13 at 50 rpm and 185 °C and melt extruded from the slit die 14 into the enclosed polycarbonate box 16 where it was coated, using a vibrating feeder, with Composite 2. The vibrating feeder 17 was adjusted to give a uniform coating of treatment powder composite on the extruded PVC sheet 15. The treated sheet was passed through a calendar roller at 25°C to form a smooth continuous covering of the composite on the extruded sheet.

The sample was placed into the apparatus shown in Figure 2 and its cleanability and DPR were tested as described previously. The sample showed a cleanability of 5.8 and a DPR of 8.2. A drop of water placed on the surface showed an advancing water contact angle (W. A.) of 134.5 degrees. These results are shown in Table 1.

Comparative Example 1:

A sample of PVC melt extruded as described in Example 1, but without the composite of this disclosure was evaluated as described above and had a cleanability rating of -1.7 (actually appeared dirtier after water rinsing), and a DPR of 2.2. The WA was 94 degrees. These results are shown in Table 1.

Examples 2-6:

Example 1 was repeated with the exceptions shown in Table 1 and the samples were evaluated as described earlier. Results are shown in Table 1.

Examples 7-8:

A mixture of ethylene vinyl acetate carbon monoxide terpolymer Elvaloy® 742 and hydrophobically treated $TiO_2$ (R-104, E.I. du Pont de Nemours and Company, Wilmington, DE) was premixed to form a composite and the composite was applied to the extruded PVC sheet as described previously, to give a self-cleaning surface.

Examples 9-11:

A mixture of Elvaloy® 742 and R-104 (hydrophobically treated TiO2 E. I. Dupont, Wilmington, DE) was premixed and applied to the extruded PVC sheet as described previously, to give a self-cleaning surface. The temperature of the calender rolls (Figure One Item 19) was systematically varied from 25 °C to 50 °C to give treated surfaces which exhibited improved cleanability over the control.

Table 1

| Example | Roll Temp (C) | Resin Powder gms | Surface Particles gms | Tackifying Agent | DPR | C | W.A. |
|---|---|---|---|---|---|---|---|
| 1 | 25 | 270 | 30 LE1 | 1 % DC-200 1 % Atmer-163 | 8.2 | 5.6 | 134 |
| Compar 1 | 25 | 300 | None | None | 2.2 | -1.7 | 94 |
| 2 | 25 | 240 | 60 LE1 | Same as 1 | 8.2 | 6.6 | 134 |
| 3 | 25 | 290 | 10 LE1 | Same as 1 | 8.5 | 5.8 | 144 |
| 4 | 25 | 270 | 30 LE1 | none | 6 | 4.7 | 147 |
| 5 | 25 | 240 | 70 LE1 | none | 6 | 5 | 144 |
| 6 | 25 | 290 | 10 LE1 | none | 7.3 | 2.7 | 125 |
| 7 | 25 | 240 | 60 R-104 | none | 7.3 | 8.2 | 142 |
| 8 | 25 | 200 | 100 R-104 | none | 9.2 | 6.7 | 125 |
| 9 | 25 | 300 | 30 R-104 | Same as 1 | 3.6 | 3.2 | 126 |
| 10 | 40 | 300 | 30 R-104 | Same as 1 | 2.8 | 0.24 | 117 |
| 11 | 50 | 300 | 30 R-104 | Same as 1 | 6.9 | 3.0 | 115 |

Resin - Elvaloy® 742ap
LE-1 - Degussa LE1 hydrophobically treated fumed silica
DPR - Dirt Pick-up Resistance as defined earlier
C - Cleanability as defined earlier
W.A. - Advancing water contact angle

**Claims**

1. A self cleaning thermoplastic substrate, comprising: a thermoplastic substrate surface having secured thereto a plurality of composite particles, the composite particles comprising a mixture of a thermoplastic resin powder particle, a tackifier and a hydrophobically treated inorganic particle whereby the tackifier adheres the hydrophobically treated particles to the resin powder particle.

2. The self cleaning thermoplastic substrate of claim 1 wherein the thermoplastic substrate is selected from the group consisting of polyvinyl chloride, polyethylene, polyvinylidene fluoride, polypropylene, and acrylonitrile butadiene styrene terpolymer.

3. The self cleaning thermoplastic substrate of claim 1 wherein the thermoplastic resin powder is selected from the group consisting of polyvinyl chloride, polymethyl methacrylate, polyolefin, copolymer of ethylene acrylate, copolymer of ethylene methacrylate and terpolymer of ethylene, vinyl acetate and carbon monoxide, and mixtures thereof.

4. The self cleaning thermoplastic substrate of claim 1 wherein the composite powder is on the surface in an amount ranging from 0.1 wt.% to 50 wt.% based on the weight of the self cleaning thermoplastic substrata.

5. The self cleaning thermoplastic substrate of claim 1 wherein the hydrophobically treated particle is selected from the group consisting of silicate, metal oxide, calcium carbonate, barium sulfate, metal powder, silica and mixtures thereof.

6. The self cleaning thermoplastic substrate of claim 1 wherein the hydrophobically treated particle is fumed silica.

7. The self cleaning thermoplastic substrate of claim 1 wherein hydrophobically treated particle is titanium dioxide.

8. The self cleaning thermoplastic substrate of claim 1 wherein the hydrophobically treated particles are treated with a surface treatment selected from the group consisting of organo-silane; organo-siloxane; fluoro-silane; organo-phosphonate; organo-phosphoric acid compound; organo-phosphinate; organo-sulfonic compound; hydrocarbon-based carboxylic acid; hydrocarbon-based carboxylic acid derivative; hydrocarbon-based carboxylic acid polymer; hydrocarbon-based amide; low molecular weight hydrocarbon wax; low molecular weight polyolefin; low molecular weight polyolefin co-polymer; hydrocarbon-based polyol; hydrocarbon-based polyol derivative; alkanolamine; alkanolamine derivative; organic dispersing agent; and mixtures thereof.

9. The self cleaning thermoplastic substrate of claim 8 wherein the organo-silane is represented by the structural formula

$$Si(R^1)(R^2)(R^3)(R^4) \qquad (I)$$

wherein at least one R is a non-hydrolyzable organic group; and at least one R is a hydrolyzable group.

10. The self cleaning thermoplastic substrate of claim 1 wherein the ratio of the thermoplastic resin powder particles to hydrophobically treated particles of the composite ranges from 10:1 to 1:10.

11. The self cleaning thermoplastic substrate of claim 1 wherein the tackifier is a polysiloxane.

12. The self cleaning thermoplastic substrate of claim 11 wherein the polysiloxane has the structural formula

$$Me_3SiO[SiOMeR^7]_x\text{-}[SiOMe_2]_y\text{-}SiMe_3,$$

where x and y are Independently Integers from 0 to 200 and $R^7$ is a saturated or unsaturated linear or branched unsubstituted or heteroatom-substituted hydrocarbon containing 1 to 20 carbon atoms.

13. The self cleaning thermoplastic substrate of claim 11 wherein the polysiloxane is selected from the group consisting of polydimethylsiloxane, vinyl phenylmethyl terminated dimethyl siloxane, divinylmethyl terminated polydimethyl siloxane, and mixtures thereof.

14. The self cleaning thermoplastic substrate of claim 1 wherein the mixture further comprises an antistatic agent.

**15.** The self cleaning thermoplastic substrate of claim 14 wherein the antistatic agent Is an ethoxylated amine.

**16.** The self cleaning thermoplastic substrate of claim 14 wherein the antistatic agent is a $C_{13}/C_{15}$ alkyldiethanolamine.

**17.** The self cleaning thermoplastic substrate of claim 14 wherein the tackifier is a polysiloxane and the antistatic agent is a $C_{13}/C_{15}$ alkyldiethanolamine.

**18.** A process for making a self cleaning thermoplastic substrate as claimed in anyone of claims 1-3, 5, 11 and 14-16, comprising:

mixing a plurality of thermoplastic resin powder particles, a plurality of hydrophobically treated particles and a tackifier to form a composite powder;
extruding a thermoplastic to form a substrate having a surface; and
securing the composite powder to the surface of the thermoplastic substrate by applying the composite powder to the surface as the thermoplastic is being extruded and calendaring or compression molding the substrate.


**Patentansprüche**

**1.** Selbstreinigendes thermoplastisches Substrat umfassend: eine thermoplastische Substratoberfläche, auf der mehrere Verbundstoffteilchen befestigt sind, wobei die Verbundstoffteilchen eine Mischung eines thermoplastischen Harzpulverteilchens, eines Klebrigmachers und eines hydrophob behandelten anorganischen Teilchens umfasst, wobei der Klebrigmacher die hydrophob behandelten Teilchen an dem Harzpulverteilchen befestigt.

**2.** Selbstreinigendes thermoplastisches Substrat nach Anspruch 1, wobei das thennoplastische Substrat aus der Gruppe ausgewählt ist bestehend aus Polyvinylchlorid, Polyethylen, Polyvinylidenfluorid, Polypropylen und Acrylnitril-Butadien-Styrol-Terpolymer.

**3.** Selbstreinigendes thermoplastisches Substrat nach Anspruch 1, wobei das thermoplastische Harzpulver aus der Gruppe ausgewählt ist bestehend aus Polyvinylchlorid, Polymethylmethacrylat, Polyolefin, Copolymer von Ethylenacrylat, Copolymer von Ethylenmethacrylat und Terpolymer von Ethylen, Vinylacetat und Kohlenmonoxid und Mischungen davon.

**4.** Selbstreinigendes thermoplastisches Substrat nach Anspruch 1, wobei das Verbundstoffpulver sich auf der Oberfläche in einer Menge im Bereich von 0,1 Gew.-% bis 50 Gew.-%, auf das Gewicht des selbstreinigenden thermoplastischen Substrats bezogen, befindet.

**5.** Selbstreinigendes thermoplastisches Substrat nach Anspruch 1, wobei das hydrophob behandelte Teilchen aus der Gruppe ausgewählt ist bestehend aus Silicat, Metalloxid, Calciumcarbonat, Bariumsulfat, Metallpulver, Siliciumdioxid und Mischungen davon.

**6.** Selbstreinigendes thermoplastisches Substrat nach Anspruch 1, wobei das hydrophob behandelte Teilchen pyrogenes Siliciumdioxid ist.

**7.** Selbstreinigendes thermoplastisches Substrat nach Anspruch 1, wobei das hydrophob behandelte Teilchen Titandioxid ist.

**8.** Selbstreinigendes thermoplastisches Substrat nach Anspruch 1, wobei die hydrophob behandelten Teilchen mit einer Oberflächenbehandlung behandelt sind ausgewählt aus der Gruppe bestehend aus Organosilan; Organosiloxan; Fluorsilan; Organophosphonat; Organophosphorsäureverbindung; Organophosphinat; Organosulfunsäureverbindung; Carbonsäure auf Kohlenwasserstoffbasis; Carbonsäurederivat auf Kohlenwasserstoffbasis; Carbonsäurepolymer auf Kohlenwasserstoffbasis; Amid auf Kohlenwasserstoffbasis; niedermolekularem Kohlenwasserstoffwachs, niedermolekularem Polyolefin; niedermolekularem Polyolefin-Copolymer; Polyol auf Kohlenwasserstoffbasis; Polyolderivat auf Kohlenwasserstoffbasis; Alkanolamin; Alkanolaminderivat; organischem Dispergiermittel; und Mischungen davon.

**9.** Selbstreinigendes thermoplastisches Substrat nach Anspruch 8, wobei das Organosilan durch die strukturelle Formel:

$$Si(R^1)(R^2)(R^3)(R^4) \qquad (I)$$

dargestellt ist, wobei mindestens ein R eine nichthydrolysierbare organische Gruppe ist; und mindestens ein R eine hydrolysierbare Gruppe ist.

**10.** Selbstreinigendes thermoplastisches Substrat nach Anspruch 1, wobei das Verhältnis der thermoplastischen Harzpulverteilchen zu hydrophob behandelten Teilchen des Verbundstoffs im Bereich von 10:1 bis 1:10 liegt.

**11.** Selbstreinigendes thermoplastisches Substrat nach Anspruch 1, wobei der Klebrigmacher ein Polysiloxan ist.

**12.** Selbstreinigendes thermoplastisches Substrat nach Anspruch 11, wobei das Polysiloxan die strukturelle Formel

$$Me_3SiO[SiOMeR^7]_x\text{-}SiOMe_2]_y\text{-}SiMe_3$$

aufweist, wobei x und y unabhängig ganze Zahlen von 0 bis 200 sind und $R^7$ ein gesättigter oder ungesättigter, linearer oder verzweigter, unsubstituierter oder heteroatomsubstituierter Kohlenwasserstoff ist, der 1 bis 20 Kohlenstoffatome enthält.

**13.** Selbstreinigendes thermoplastisches Substrat nach Anspruch 11, wobei das Polysiloxan aus der Gruppe ausgewählt ist bestehend aus Polydimethylsiloxan, Vinylphenylmethyl-terminiertem Dimethylsiloxan, Divinylmethyl-terminiertem Polydimethylsiloxan und Mischungen davon.

**14.** Selbstreinigendes thermoplastisches Substrat nach Anspruch 1, wobei die Mischung des Weiteren ein Antistatikmittel umfasst.

**15.** Selbstreinigendes thermoplastisches Substrat nach Anspruch 14, wobei das Antistatikmittel ein ethoxyliertes Amin ist.

**16.** Selbstreinigendes thermoplastisches Substrat nach Anspruch 14, wobei das Antistatikmittel ein $C_{13}$-/$C_{15}$-Alkyldiethanolamin ist.

**17.** Selbstreinigendes thermoplastisches Substrat nach Anspruch 14, wobei der Klebrigmacher ein Polysiloxan und das Antistatikmittel ein $C_{13}$-/$C_{15}$-Alkyldiethanolamin ist.

**18.** Verfahren zum Herstellern eines selbstreinigenden thermoplastischen Substrats wie in einem der Ansprüche 1-3, 5, 11 und 14-16 beansprucht, umfassend:

das Mischen mehrerer thermoplastischer Harzpulverteilchen, mehrerer hydrobphob behandelter Teilchen und eines Klebrigmachers unter Bildung eines Verbundstoffpulvers;
das Extrudieren eines Thermoplasts unter Bildung eines Substrats, das eine Oberfläche aufweist; und
das Befestigen des Verbundstoffpulvers an der Oberfläche des thermoplastischen Substrats durch Aufbringen des Verbundstoffpulvers auf die Oberfläche, während das Thermoplast extrudiert wird, und das Kalendrieren oder Formpressen des Substrats.

**Revendications**

**1.** Substrat thermoplastique autonettoyant, comprenant: une surface de substrat thermoplastique à laquelle sont fixées une pluralité de particules composites, les particules composites comprenant un mélange d'une particule de poudre de résine thermoplastique, d'un agent collant et d'une particule inorganique rendue hydrophobe par traitement, de sorte que l'agent collant fait adhérer les particules rendues hydrophobes par traitement à la particule de poudre de résine.

**2.** Substrat thermoplastique autonettoyant selon la revendication 1, lequel substrat thermoplastique est choisi dans le groupe constitué par un chlorure de polyvinyle, un polyéthylène, un fluorure de polyvinylidène, un polypropylène et un terpolymère acrylonitrile butadiène styrène.

3. Substrat thermoplastique autonettoyant selon la revendication 1, dans lequel la poudre de résine thermoplastique est choisie dans le groupe constitué par un chlorure de polyvinyle, un méthacrylate de polyméthyle, une polyoléfine, un copolymère d'acrylate d'éthylène, un copolymère de méthacrylate d'éthylène et un terpolymère d'éthylène, d'acétate de vinyle et de monoxyde de carbone, et les mélanges de ceux-ci.

4. Substrat thermoplastique autonettoyant selon la revendication 1, dans lequel la poudre composite est sur la surface en une quantité allant de 0,1% en poids à 50% en poids par rapport au poids du substrat thermoplastique autonettoyant.

5. Substrat thermoplastique autonettoyant selon la revendication 1, dans lequel la particule rendue hydrophobe par traitement est choisie dans le groupe constitué par un silicate, un oxyde de métal, le carbonate de calcium, le sulfate de baryum, une poudre de métal, une silice et un mélange de ceux-ci.

6. Substrat thermoplastique autonettoyant selon la revendication 1, dans lequel la particule rendue hydrophobe par traitement est une silice sublimée.

7. Substrat thermoplastique autonettoyant selon la revendication 1, dans lequel la particule rendue hydrophobe par traitement est le dioxyde de titane.

8. Substrat thermoplastique autonettoyant selon la revendication 1, dans lequel les particules rendues hydrophobes par traitement sont traitées avec un traitement de surface choisi dans le groupe constitué par un organosilane; un organosiloxane; un fluoro-silane; un organo-phosphonate; un composé d'acide organo-phosphorique; un organo-phosphinate; un composé organo-sulfonique; un acide carboxylique à base d'hydrocarbure; un dérivé d'acide carboxylique à base d'hydrocarbure; un polymère d'acide carboxylique à base d'hydrocarbure; un amide à base d'hydrocarbure; une cire d'hydrocarbure de bas poids moléculaire; une polyoléfine de bas poids moléculaire; un copolymère de polyoléfine de bas poids moléculaire; un polyol à base hydrocarbure; un dérivé de polyol à base d'hydrocarbure; une alcanolamine; un dérivé d'alcanolamine; un agent dispersant organique; et les mélanges de ceux-ci.

9. Substrat thermoplastique autonettoyant selon la revendication 8, dans lequel l'organosilane est représenté par la formule structurale

$$Si(R^1)(R^2)(R^3)(R^4) \qquad (I)$$

dans laquelle au moins un R est un groupe organique non hydrolysable; et au moins un R est un groupe hydrolysable.

10. Substrat thermoplastique autonettoyant selon la revendication 1, dans lequel le rapport des particules de poudre de résine thermoplastique aux particules rendues hydrophobes par traitement du composite va de 10:1 à 1:10.

11. Substrat thermoplastique autonettoyant selon la revendication 1, dans lequel l'agent collant est un polysiloxane.

12. Substrat thermoplastique autonettoyant selon la revendication 11, dans lequel le polysiloxane a la formule structurale

$$Me_3SiO[SiOMeR^7]_x\text{-}[SiOMe_2]_y\text{-}SiMe_3,$$

où x et y sont indépendamment des entiers de 0 à 200 et $R^7$ est un hydrocarbure saturé ou insaturé linéaire ou ramifié non substitué ou substitué par un hétéroatome, contenant 1 à 20 atomes de carbone.

13. Substrat thermoplastique autonettoyant selon la revendication 11, dans lequel le polysiloxane est choisi dans le groupe constitué par un polydiméthylsiloxane, un diméthylsiloxane à terminaison vinyl phénylméthyle, un polydiméthyl siloxane à terminaison divinylméthyle, et les mélanges de ceux-ci.

14. Substrat thermoplastique autonettoyant selon la revendication 1, dans lequel le mélange comprend en outre un agent antistatique.

15. Substrat thermoplastique autonettoyant selon la revendication 14, dans lequel l'agent antistatique est une amine éthoxylée.

16. Substrat thermoplastique autonettoyant selon la revendication 14, dans lequel l'agent antistatique est une alkyldié-

thanolamine en $C_{13}/C_{15}$,

**17.** Substrat thermoplastique autonettoyant selon la revendication 14, dans lequel l'agent collant est un polysiloxane et l'agent antistatique est une alkyldiéthanolamine en $C_{13}/C_{15}$.

**18.** Procédé pour fabriquer un substrat thermoplastique autonettoyant selon l'une quelconque des revendications 1 à 3, 5, 11 et 14 à 16, comprenant:

> 1c mélange d'une pluralité de particules de poudre de résine thermoplastique, d'une pluralité de particules rendues hydrophobes par traitement et d'un agent collant pour former une poudre composite;
> l'extrusion d'un thermoplastique pour former un substrat ayant une surface; et
> la fixation de la poudre composite à la surface du substrat thermoplastique en appliquant la poudre composite à la surface à mesure que le thermoplastique est extrudé, et le calandrage ou le moulage par compression du substrat.

FIG. 1

FIG. 2

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 98892507 P
- US 6858284 B
- US 5560845 A, Birmingham, Jr.
- US 2005023992 A
- US 4303702 A
- US 20060167146 A1
- GB 906174 B